# EUROPEAN PATENT APPLICATION

(11) **EP 4 768 138 A1**
(43) Date of publication of application: **01.07.2026**
(21) Application number: 25790606.5
(22) Date of filing: 14.04.2025
(51) Int. Cl.: B05C 5/02, B05C 11/10, H01M 4/04

(54) **SLOT DIE COATER**

(30) Priority: 15.04.2024 KR 20240050212
(71) Applicant: LG ENERGY SOLUTION, LTD., Seoul 07335 (KR)
(72) Inventor: YOUN, Seung-Min, Daejeon 34122 (KR); BAK, So-Yeong, Daejeon 34122 (KR); CHOI, Pa-UI, Daejeon 34122 (KR); KANG, Ho-Jun, Daejeon 34122 (KR); KIM, Dong-Hyun, Daejeon 34122 (KR); YOON, Han-Ju, Daejeon 34122 (KR); CHAE, Hyeong-Geun, Daejeon 34122 (KR); SHIN, Gi-Chang, Daejeon 34122 (KR); JEON, Shin-Wook, Daejeon 34122 (KR); CHOI, Hyun-Woo, Daejeon 34122 (KR)
(74) Representative: Plasseraud IP
(86) International application number: PCT/KR2025/005060
(87) International publication number: WO 2025/220993

(57) **Abstract**

A slot die coater according to the present disclosure may include a plurality of slot die modules that have a slot die for applying a coating solution on a substrate, a first drive unit for moving the slot die in a first axis direction, and a rotating unit for rotating the slot die with a second axis direction as a rotation axis direction, and are disposed to be spaced apart from each other; and a module drive unit that moves each of the slot die modules in a third axis direction orthogonal to the first axis direction.

## Description

### TECHNICAL FIELD

The present disclosure relates to a slot die coater having a plurality of slot die modules that are divided from each other and driven individually. This application is based on and claims priority from Korean Patent Application No. 10-2024-0050212, filed on April 15, 2024, with the Korean Intellectual Property Office, the disclosure of which is incorporated herein in its entirety by reference.

### BACKGROUND ART

As the technology development and demand for mobile devices increase, demand for secondary batteries as an energy source is rapidly increasing, and such secondary batteries essentially include an electrode assembly, which is a power generation element. The electrode assembly has a form in which a positive electrode, a separator, and a negative electrode are stacked at least once, and the positive electrode and the negative electrode are manufactured by applying and drying a positive electrode active material slurry and a negative electrode active material slurry on a current collector made of aluminum foil and copper foil, respectively. In order to make the charging and discharging characteristics of the secondary battery uniform, the positive electrode active material slurry and the negative electrode active material slurry should be evenly coated on the current collector, and a slot die coater has been used conventionally.

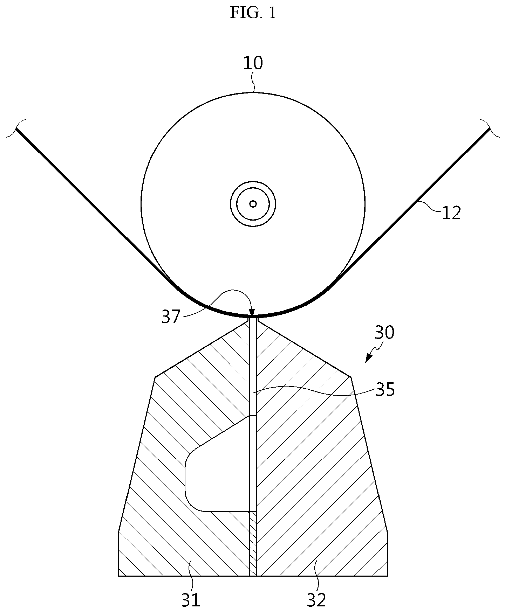

FIG. 1 illustrates an example of a coating method using a conventional slot die coater.

Referring to FIG. 1, in an electrode manufacturing method using a slot die coater, an active material slurry discharged from a slot die 30 is applied onto a current collector 12 transferred by a coating roll 10. The active material slurry discharged from the slot die 30 is widely applied to one surface of the current collector 12 to form an active material layer. The slot die 30 includes two die blocks 31, 32 and forms a slot 35 between the two die blocks 31, 32, and the active material slurry may be discharged through an outlet 37 communicating with one slot 35 to form an active material layer. The slot die coater has the advantage of high-speed coating compared to bar coating or comma coating, and thus is widely applied from the viewpoint of high productivity.

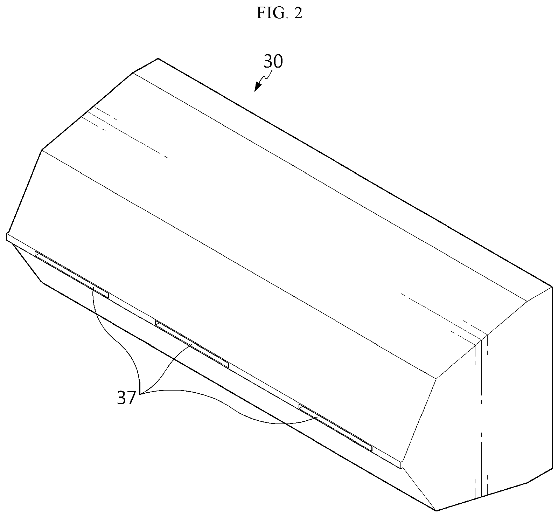

Meanwhile, in order to improve production efficiency, a slot die coater that applies a plurality of outlets to one slot die is being used. FIG. 2 is a schematic perspective view of a conventional slot die coater. Referring to FIG. 2, a plurality of outlets 37 are formed in the slot die 30. The slot die coater may form an active material layer pattern by discharging an active material slurry onto a current collector (12 in FIG. 1). At this time, since the active material slurry is discharged from a plurality of outlets 37, a plurality of active material layer patterns may be formed at a time.

Meanwhile, the shape of the pattern formed on the current collector, for example, the width or thickness of the pattern, may be controlled by the coating gap, which is the gap between the outlet 37 and the current collector 12. However, in the conventional slot die coater, a plurality of outlets 37 are formed in one slot die. Therefore, the distance between each outlet 37 and the current collector 12 may not be individually controlled, and accordingly, when a defect occurs in any one of the plurality of patterns, there is a problem in that only this pattern defect may not be corrected immediately.

### DISCLOSURE

### Technical Problem

The present disclosure is designed to solve the above-described problems, and therefore the present disclosure is directed to providing a slot die coater with an improved structure capable of simultaneously forming a plurality of patterns on a substrate and also individually controlling the shape of each pattern.

However, technical problems to be solved by the present disclosure are not limited to the above-described problems, and other problems not mentioned herein may be clearly understood by those skilled in the art from the following description of the present disclosure.

### Technical Solution

A slot die coater of the present disclosure for solving the above-described problem may include a plurality of slot die modules that have a slot die for applying a coating solution on a substrate, a first drive unit for moving the slot die in a first axis direction, and a rotating unit for rotating the slot die with a second axis direction as a rotation axis direction, and are disposed to be spaced apart from each other; and a module drive unit that moves each of the slot die modules in a third axis direction orthogonal to the first axis direction.

According to the present disclosure, the plurality of slot die modules are disposed on the same straight line along the third axis direction, and each of the slot die modules is individually movable in the third axis direction.

Additionally, according to the present disclosure, the module drive unit includes a stator disposed in the third axis direction, and a plurality of movers that are coupled to the slot die module and move along the third axis direction by an electromagnetic force formed between the stator and the mover.

Additionally, according to the present disclosure, the first drive unit has a drive part that moves along the first axis direction, wherein the drive part is provided in a pair, and the pair of drive parts are respectively connected to the slot die at two coupling points spaced apart from each other.

Additionally, according to the present disclosure, the first drive unit includes a ball screw, and the nut of the ball screw is connected to the slot die at the coupling point.

Additionally, according to the present disclosure, when there is a difference in the movement distances of the pair of drive parts, the slot die is configured to be tilted in response to the difference.

Additionally, according to the present disclosure, an elastic portion that is compressed or relaxed during tilting of the slot die is provided at the two coupling points.

Additionally, according to the present disclosure, the elastic portion is formed in an annular shape.

Additionally, according to the present disclosure, the slot die is coupled to the rotating unit, the drive part of the first drive unit is coupled to the rotating unit, and when there is a difference in the movement distances of the pair of drive parts, the rotating unit and the slot die coupled to the rotating unit are tilted together in response to the difference.

Additionally, according to the present disclosure, the drive part is provided with a coupling protrusion, the rotating unit is provided with a fastening part to which the coupling protrusion is coupled, and an elastic portion that is compressed or relaxed during tilting of the rotating unit is provided between the coupling protrusion and the fastening part.

Additionally, according to the present disclosure, the elastic portion is formed in an annular shape and disposed to surround the coupling protrusion.

Additionally, according to the present disclosure, each of the slot die modules further includes a second drive unit for moving the slot die in the second axis direction.

Additionally, according to the present disclosure, the slot die is configured to be tiltable with a first axis direction as a rotation axis direction.

Additionally, according to the present disclosure, each of the slot die modules is configured such that: the second drive unit is coupled to the slot die to linearly move the slot die in the second axis direction, the rotating unit is coupled to the second drive unit to rotate the second drive unit and the slot die together, and the first drive unit is coupled to the rotating unit to linearly move the rotating unit, the second drive unit, and the slot die together in the first axis direction.

Additionally, according to the present disclosure, the second drive unit has a drive part that moves along the second axis direction, wherein the drive part is provided in a pair, and the pair of drive parts are respectively coupled to the slot die at two coupling points spaced apart from each other, and when there is a difference in the movement distances of the pair of drive parts, the slot die is tilted in response to the difference.

Additionally, according to the present disclosure, the slot die coater further includes a measuring unit that measures the shape of a pattern formed by the coating solution applied on the substrate; and a control unit that controls the movement of the slot die according to the pattern shape measured by the measuring unit.

Additionally, according to the present disclosure, the control unit rotates or tilts the slot die with the second axis direction as a rotation axis direction when the thickness of the pattern is formed to be inclined.

Additionally, according to the present disclosure, the control unit tilts the slot die around the first axis direction when the pattern is thinner in thickness and wider in width than a reference value.

### Advantageous Effects

According to the present disclosure, the movement of a plurality of slot dies forming a pattern on a substrate may be individually controlled. Therefore, when a defect occurs in a specific pattern during pattern formation, the pattern defect may be solved by controlling the movement of the slot dies forming the corresponding pattern. In particular, there is no need to stop the operation of the device in this process, and thus the productivity of the device may be improved.

Additionally, according to the present disclosure, the degree of freedom of the slot dies is improved. In other words, the slot dies may move in various ways. Therefore, by changing the position (or arrangement form) of the slot dies in various ways depending on the type of pattern defect, the pattern defect may be efficiently corrected.

**In** particular, according to the present disclosure, the coating gap may be adjusted for each slot die. In general, the thickness of the active material layer is affected by the coating gap. Since the thickness of the active material layer may have a serious effect on the coating quality even if it changes by only a few µm, it should be managed very strictly. According to the present disclosure, when forming multiple patterns on a substrate at the same time, the coating gap of each slot die corresponding to each pattern may be individually adjusted to exhibit uniform dimensional precision.

**In** addition, various other additional effects may be achieved by various embodiments of the present disclosure. These various effects of the present disclosure will be described in detail in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic diagram illustrating an example of using a slot die coater according to the prior art.
FIG. 2 is a schematic perspective view of a slot die coater according to the prior art.
FIG. 3 is a schematic perspective view of a slot die coater according to an embodiment of the present disclosure.
FIG. 4 is an exploded perspective view of a portion of the slot die coater illustrated in FIG. 3.
FIG. 5 is an exploded perspective view of the slot die module illustrated in FIG. 3.
FIG. 6 is a cut-away perspective view of the slot die illustrated in FIG. 3.
FIG. 7 is a cut-away perspective view of a slot die according to another embodiment of the present disclosure.
FIG. 8 is a schematic configuration diagram of a module drive unit according to an embodiment of the present disclosure.
FIG. 9 is a schematic diagram for describing the coupling structure of a first drive unit in a slot die coater according to still another embodiment of the present disclosure.
FIG. 10 is a schematic cross-sectional view in the V-V' direction of FIG. 9.
FIGS. 11 to 14 are views for describing the process of correcting pattern defects.
FIG. 15 is a schematic perspective view of a slot die module according to still another embodiment of the present disclosure.
FIG. 16 is an exploded perspective view of the slot die module illustrated in FIG. 15.
FIG. 17 is a view for describing the process of forming patterns using a slot die coater of the present disclosure.
FIG. 18 is a view for describing the process of changing a pattern shape using a slot die coater of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The slot die coater of the present disclosure is a device for coating a coating solution on a substrate. The 'substrate' described hereinbelow is a current collector, and the 'coating solution' is an 'active material slurry'. The slot die coater of the present disclosure may be a device for coating one or two types of coating solutions. At this time, the two types of coating solutions may mean active material slurries having the same or different composition (types of active material, conductive agent, and binder), content (amount of active material, conductive agent, and binder), and physical properties. The slot die coater of the present disclosure may be used in the manufacture of electrodes by simultaneously applying one or two types of coating solutions, or by alternately applying two types of active material slurries and pattern coating. However, the scope of the rights of the present disclosure is not necessarily limited thereto.

For example, the substrate may be a porous support constituting a separator, and the first coating solution and the second coating solution may be organic materials having different compositions or physical properties. That is, the substrate, the first coating solution, and the second coating solution may be any of them as long as a thin film coating is required.

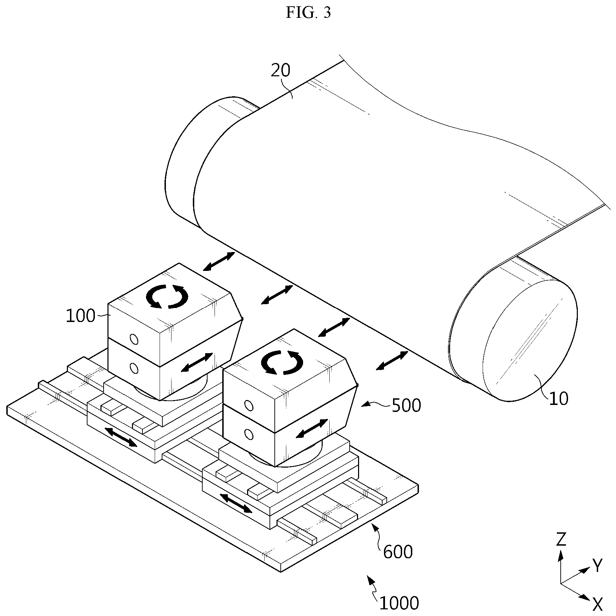

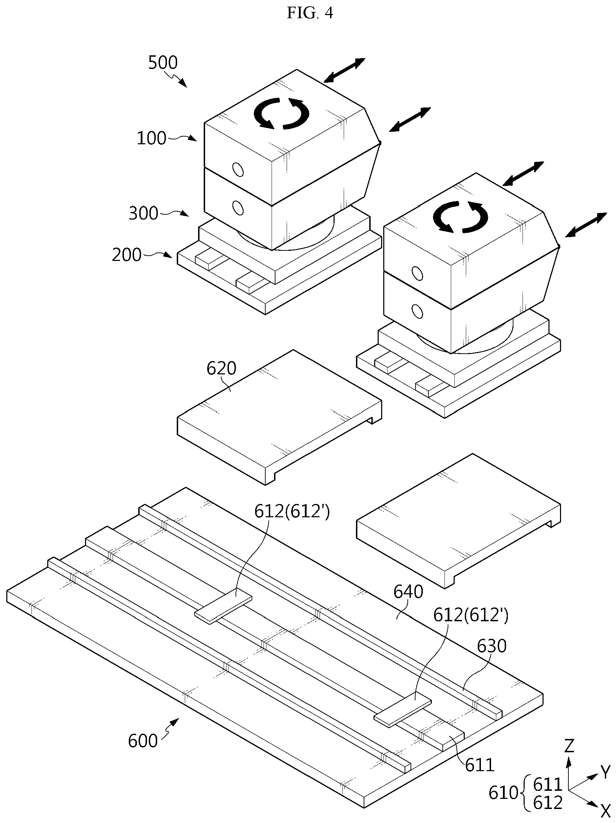

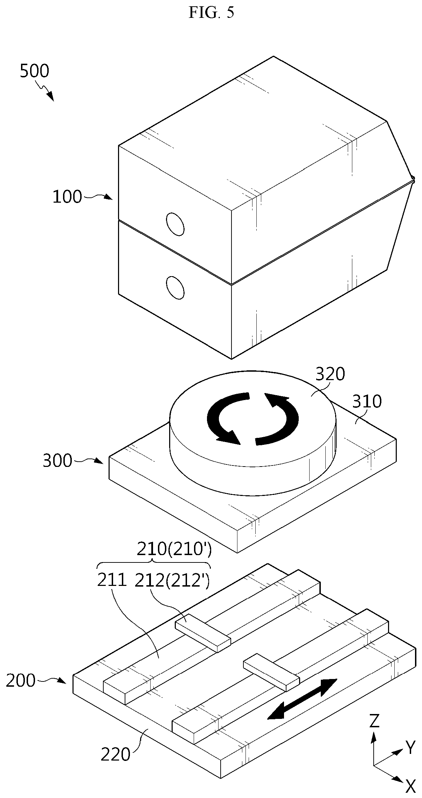

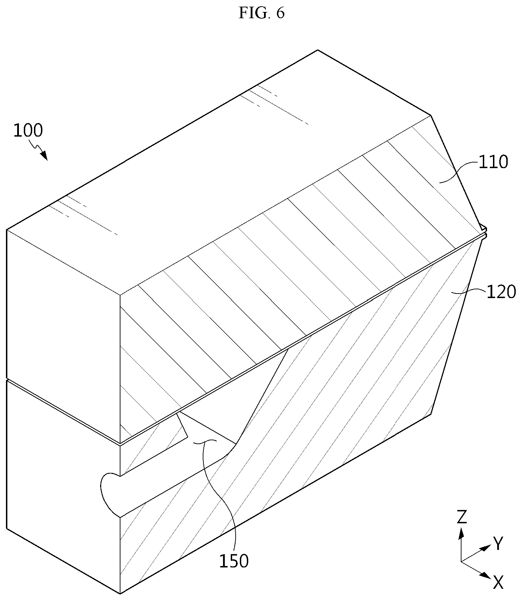

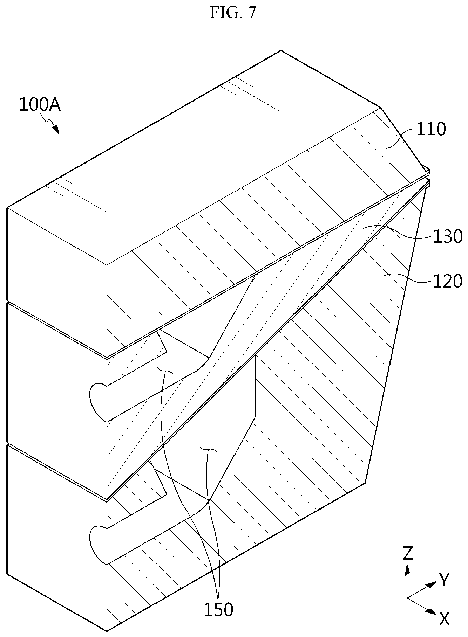

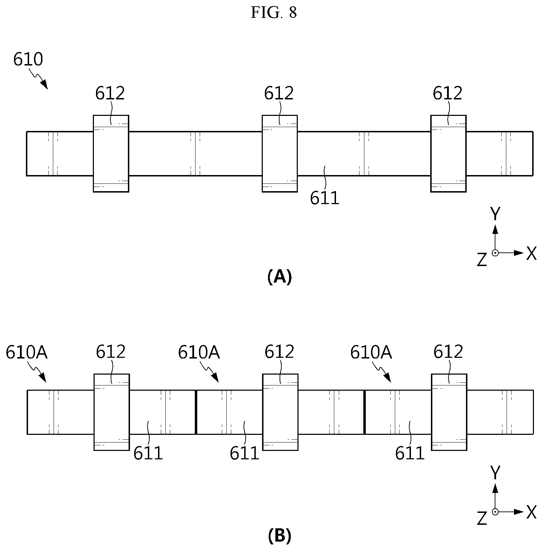

FIG. 3 is a schematic perspective view of a slot die coater according to an embodiment of the present disclosure. FIG. 4 is an exploded perspective view of a portion of the slot die coater illustrated in FIG. 3. FIG. 5 is an exploded perspective view of the slot die module illustrated in FIG. 3. FIG. 6 is a cut-away perspective view of the slot die illustrated in FIG. 3. FIG. 7 is a cut-away perspective view of a slot die according to another embodiment of the present disclosure. FIG. 8 is a schematic configuration diagram for describing a module drive unit according to an embodiment of the present disclosure.

Referring to FIGS. 3 to 8, a slot die coater 1000 according to the present embodiment may include a slot die module 500 and a module drive unit 600.

The slot die modules 500 may be provided in plurality. For example, as illustrated in FIG. 3, two slot die modules 500 may be provided. However, in FIG. 3, two slot die modules 500 are illustrated for simplicity and clarity of description, and it is obvious that the number of slot die modules 500 may be changed in consideration of the width of the substrate 20, productivity, and the like. For example, three or four slot die modules 500 may be provided, nine or ten slot die modules 500 may be provided, and a larger number of slot die modules may be provided. And, a plurality of slot die modules 500 may be individually driven.

**In** order to use a current collector having a wide width as a substrate 20 to increase production, the width of one slot die 100 may be increased, but in that case, it is difficult to achieve uniformity of the coating gap in the width direction. In the present disclosure, it is proposed to use multiple slot dies 100 for precise control of the coating gap so that uniform application may be achieved in the width direction, and in particular, a precise individual control configuration of each slot die 100 is proposed.

Specifically, each slot die module 500 may include a slot die 100, a first drive unit 200, and a rotating unit 300.

The slot die 100 is for receiving a coating solution, for example, an active material slurry, from an external source and applying it on the substrate 20. Specifically, as illustrated in FIG. 6, the slot die 100 may include a plurality of die blocks, for example, two die blocks 110, 120. A slot is formed between die blocks 110, 120, and this slot may be a passage through which the coating solution is discharged, that is, an outlet. And, at least one die block 120 of the die blocks 110, 120 may be provided with an injection hole 150 through which the coating solution is supplied from the external source. The slot die configured in this way may apply one type of coating solution onto the substrate.

Meanwhile, the slot die may be configured to apply two types of coating solutions. Specifically, as illustrated in FIG. 7, the slot die 100A may include three or more die blocks 110, 120, 130. For example, when three die blocks 110, 120, 130 are included, a first slot may be formed between the upper die block 110 and the middle die block 130, and a second slot may be formed between the middle die block 130 and the lower die block 120. And, an injection hole 150 may be formed in each of the middle die block 130 and the lower die block 120. The slot die configured in this way may apply two types of coating solutions onto the substrate 20.

Meanwhile, the structure of the slot die is not limited to the structure described above, and may be configured to apply three or more types of coating solutions. Additionally, various structures applicable to the slot die may be included at the time of the present application.

The first drive unit 200 is for moving the slot die 100 in the first axis direction, and more specifically, may be for linearly moving the slot die 100 in the first axis direction. Here, the first axis direction may mean the Y-axis direction based on FIG. 4. Hereinafter, the first axis direction may be referred to as the front-back direction on a horizontal plane (X-Y axis plane). The first drive unit 200 may be connected to the slot die 100. Here, the connection may mean a state in which the first drive unit 200 is directly coupled to the slot die 100 or the first drive unit 200 is coupled to another configuration coupled to the slot die 100, and thus the driving force of the first drive unit 200 may be transmitted to the slot die 100. In other words, the driving force of the first drive unit 200, that is, the driving force in the Y-axis direction, is transmitted to the slot die 100, which may mean a coupling in a state where the slot die 100 may linearly move in the Y-axis direction. For example, the first drive unit 200 may be coupled to a rotating unit 300 to be described later, and the slot die 100 may be coupled to this rotating unit 300. In this case, the first drive unit 200 may be connected to the slot die 100 through the rotating unit 300.

The first drive unit 200 may include a linear actuator 210' that linearly moves an object (i.e., the slot die). For example, the linear actuator 210' may be implemented in the form of a linear motor, a ball screw, and a hydraulic or pneumatic actuator. However, it may be more preferable to utilize a linear motor or a ball screw that may precisely control the displacement of movement. Additionally, the first drive unit 200 may include a first support plate 220. And, the above-mentioned linear actuator 210' may be coupled to the upper side of the first support plate 220.

The rotating unit 300 may be for rotating the slot die 100 with the second axis direction as the rotation axis direction. Here, the second axis direction may mean the Z-axis direction based on FIG. 4. Hereinafter, the second axis direction may be referred to as the upper-lower direction perpendicular to the horizontal plane (X-Y plane). The rotating unit 300 may be connected to the slot die 100. The meaning of the connection may be similar to that described in the first drive unit 200. The rotating unit 300 may rotate the slot die 100 with the upper-lower direction as the rotation axis direction.

Specifically, the rotating unit 300 may include a motor and a rotating plate 320 connected to a driving shaft of the motor. The slot die 100 may be coupled to the rotating plate 320. For example, the slot die 100 may be coupled and fixed to the upper side of the rotating plate 320. Additionally, the rotating unit 300 may include a second support plate 310. The second support plate 310 may be disposed on the lower side of the motor to support the motor. In describing the above-mentioned rotating unit, the motor itself may be a known configuration. And, the arrangement method of the motor or the structure for connecting the motor to the rotating plate may be changed depending on the relationship with the surrounding configurations. Therefore, in the present specification, the specific structure of the above-mentioned rotating unit 300 (and other drive parts are also the same) is omitted and expressed schematically.

The module drive unit 600 may be for moving the slot die module 500. More specifically, the module drive unit 600 may be for linearly moving the slot die module 500 in the third axis direction. Here, the third axis direction is a direction orthogonal to the first axis on the horizontal plane, and may mean the X-axis direction based on FIG. 4. Hereinafter, the third axis direction may be referred to as the left-right direction. The module drive unit 600 is connected to a plurality of slot die modules 500 and may linearly move the slot die modules 500 in the left-right direction. For example, the module drive unit 600 may be coupled to the lower side of each slot die module 500 to support each slot die module 500. The module drive unit 600 may linearly move each slot die module 500 in the left-right direction.

The module drive unit 600 may include various configurations for linearly moving an object, for example, a linear motor or a ball screw.

**In** summary, in the slot die coater 1000 described above, the slot die modules 500 are provided in plurality and may be coupled to the upper side of the module drive unit 600. Each slot die module 500 may be linearly moved in the left-right direction (X-axis direction) by the module drive unit 600. Additionally, each slot die module 500 may be linearly moved and rotated individually. Specifically, the slot die 100 provided in each slot die module 500 may be linearly moved in the front-back direction (Y-axis direction) by the first drive unit 200. Additionally, the slot die 100 may be rotated with the upper-lower direction (Z-axis direction) as the rotation axis direction by the rotating unit 300.

According to the present embodiment, each slot die 100 may be linearly moved and rotated. In particular, referring to FIG. 3, each slot die 100 may individually move in the front-back direction and rotate with the upper-lower direction as the rotation axis direction. At this time, when the slot die 100 moves in the front-back direction or rotates, the gap between the slot die 100 and the substrate 20 may be adjusted. Accordingly, when a defect occurs in any one of the plurality of patterns formed on the substrate 20, the pattern defect may be corrected by moving or rotating the slot die 100 forming the corresponding pattern. That is, if a defect occurs in any one pattern when forming the plurality of patterns on the substrate 20 with the slot die coater 1000, the pattern defect may be corrected by controlling the position (posture) of the individual slot die 100 even without stopping the entire device. Therefore, the productivity of the slot die coater may be improved.

Additionally, two or more slot dies 100 may be applied to one substrate 20 in the width direction. Each slot die 100 may form one or more patterns. Each slot die 100 may be precisely controlled. For example, each slot die 100 may be linearly moved and rotated. And, it may be possible to control to vary the flow rate of the coating solution supplied to each slot die 100. Accordingly, the left/right coating gap, width direction position, slurry supply flow rate, and the like may be controlled for each slot die 100, thereby improving coating quality, for example, coating thickness, coating width, mismatch, and the like.

Meanwhile, a specific example of controlling the slot die to correct the pattern defect will be described later.

According to the present embodiment, a plurality of slot die modules 500 may be disposed on the same straight line along the third axis direction. And, each slot die module 500 may be individually movable in the third axis direction.

Specifically, a plurality of slot die modules 500 may be disposed on the same straight line along the third axis direction, that is, the left-right direction. In this regard, when applying an active material slurry to a substrate 20, for example, a current collector, the active material slurry may be applied simultaneously to a plurality of points of the current collector having a wide width, and a portion where a pattern is formed by the active material slurry may be cut and used as the current collector (slitting). At this time, if the gap between the patterns, that is, the gap between the slot dies 100, is wide, the amount of discarded current collector increases, and thus, the plurality of slot dies 100 may be disposed at narrow intervals. In particular, a plurality of patterns are formed on one current collector, so that the gap between each slot die 100 and the current collector 20 may be initially set at equal intervals, and thus each slot die module 500 may be disposed on the same straight line along the left-right direction.

Additionally, the module drive unit 600 may individually move each slot die module 500 in the left-right direction. For example, as illustrated in FIG. 4, the module drive unit 600 may include a plurality of moving parts 612' capable of linearly moving in the left-right direction (X-axis direction). Each moving part 612' may be individually movable in the left-right direction. And, one slot die module 500 may be connected to each moving part 612'. More specifically, the moving plate 620 may be coupled to each moving part 612', and the slot die module 500 may be coupled on this moving plate 620. According to this configuration, each slot die module 500 may be independently movable in the left-right direction.

According to an embodiment of the above-mentioned configuration, the positions of each slot die 100 in the left-right direction (X-axis direction) may be individually controlled. Therefore, when the pattern shape is defective or the gap between patterns needs to be adjusted, the positions (positions in the X-axis direction) of each slot die 100 may be individually adjusted.

**In** particular, according to the present embodiment, the module drive unit 600 may include a stator 611 and a mover 612. Specifically, the module drive unit 600 may include a linear motor 610. The linear motor 610 may be configured to include the stator 611 and the mover 612. The stator 611 includes a magnet (or coil) and may be formed long in one direction, that is, in a linear movement direction. In particular, in the case of the present embodiment, the stator 611 may be disposed to be long in the left-right direction (X-axis direction). The mover 612 is coupled to the stator 611 and may be linearly moved along the length direction of the stator 611 by an electromagnetic force with the stator 611. That is, the mover 612 of the linear motor 610 may be the moving part 612' of the module drive unit 600 described above.

In particular, in the case of the present embodiment, the module drive unit 600 may individually linearly move a plurality of slot die modules 500, and thus, the module drive unit 600 may include a plurality of movers 612 that are individually moved. The module drive unit 600 of this type may be configured in two forms.

First, as illustrated in (A) of FIG. 8, the module drive unit may include a linear motor 610 including one stator 611 and a plurality of movers 612. The stator 611 may be formed long and disposed in the left-right direction. The plurality of movers 612 may be coupled to the stator 611 to be spaced apart from each other. The current supplied to each mover 612 is individually controlled, and accordingly, each mover 612 may be independently moved in the left-right direction. In this way, the linear motor 610 in which a plurality of movers 612 are provided on one stator 611 may be referred to as a multi-mover linear motor or a multi-slide linear motor.

The linear motor 610 may precisely drive a plurality of movers 612 with a single stator 611, and particularly may have an advantage in space efficiency. However, it may be necessary to control a plurality of movers 612 simultaneously and consider a phenomenon in which an electromagnetic force changes according to a change in the position of adjacent movers 612, that is, interference between the movers 612. However, the distance by which the actual slot die 100 should move to correct a pattern defect may be a very fine distance. For example, the movement distance of the slot die 100 for correcting actual pattern defects may be in micrometer units. Therefore, the interference between the movers 612 may not be large, and thus it may be sufficiently possible to implement the module drive unit in the form of a multi-mover linear motor.

Second, as illustrated in (B) of FIG. 8, the module drive unit may include a plurality of linear motors 610A. For example, the module drive unit may include three linear motors 610A, and thus may include three stators 611 and three movers 612. The three stators 611 may be disposed to be connected in a row in the left-right direction. The three movers 612 may be coupled to each stator 611 one by one. Each of the three linear motors 610A is individually controlled, and accordingly, the slot die modules coupled to each mover 612 may be individually moved.

Meanwhile, referring to FIG. 4, the linear motor 610 may be disposed on the upper side of the base portion 640. Specifically, the stator 611 may be coupled to the upper side of the base portion 640. Additionally, linear guides 630 may be installed on both sides of the stator 611. Each linear guide 630 may be formed long in the length direction of the stator 611, that is, in the left-right direction. The linear guides 630 may be installed in a pair on both sides of the stator 611. When the mover 612 moves, the mover 612 is supported by the linear guide 630 and may stably move along the linear guide 630 in the left-right direction. More specifically, a moving plate 620 may be coupled to the upper side of the mover 612. Both ends of the moving plate 620 may be supported by the linear guide 630, and in this state, the moving plate 620 may be moved together with the mover 612 in the left-right direction. Meanwhile, the base portion 640, the moving plate 620, and the linear guide 630 described above may be included as configurations of the module drive unit 600.

Referring to FIG. 5 again, the first drive unit 200 described above may include a pair of linear actuators 210'. Each linear actuator 210' may have a drive part 212'. The drive part 212' may mean a part that linearly moves in the linear actuator 210'. The drive part 212' may be referred to as a different name depending on the type of the linear actuator 210'. For example, in the linear motor, the mover may be the drive part 212'. And, in the ball screw, the nut may be the drive part 212'.

The pair of linear actuators 210' may be connected to the slot die 100. In particular, the drive part 212' is connected to the slot die 100, and the slot die 100 may be moved linearly in conjunction with the linear movement of the drive part 212'. For example, the drive part 212' may be coupled to the rotating unit 300, more specifically, the lower surface of the second support plate 310, and the slot die 100 may be coupled to the rotating unit 300. Then, the drive part 212' may be connected to the slot die 100 through the rotating unit 300.

The drive part 212' is provided in a pair, and the pair of drive parts 212' may be connected to the slot die 100 at positions spaced apart from each other. For example, the pair of drive parts 212' may be coupled to the lower surface of the second support plate 310, and may be coupled at positions spaced apart from each other. At this time, the part where the drive part 212' and the second support plate 310 are coupled to each other may be referred to as a coupling point. And, these coupling points may be spaced apart from each other, and in particular, may be spaced apart in the left-right direction, that is, in the X-axis direction.

According to an embodiment of the above-mentioned configuration, the first drive unit 200 is connected to the slot die 100 at two coupling points rather than one, and the slot die 100 may be moved in the front-back direction through the two drive parts 212'. Therefore, the slot die 100 may be stably linearly moved.

**In** particular, the first drive unit 200 may include a ball screw 210. In other words, the linear actuator 210' included in the first drive unit 200 may be a ball screw 210. The ball screw 210 may include a screw shaft 211, a nut 212, and a ball bearing. The screw shaft 211 may have screw threads formed along the length direction. The screw shaft 211 may be connected to a servo motor to rotate. The nut 212 is coupled to the screw shaft 211 and may linearly move along the length direction of the screw shaft 211 in conjunction with the rotation of the screw shaft 211. The ball bearing may be disposed between the screw shaft 211 and the nut 212. For reference, the configurations of the ball screw 210 are schematically expressed in the drawings in this specification, and thus may be different from the actual shape of the ball screw. However, the ball screw is a known configuration, so that it may be sufficiently understood by those skilled in the art even if it is expressed in a simplified manner in the drawing, and a more detailed description of the ball screw may be omitted.

**In** the case of the present embodiment, the nut 212 of the ball screw 210 may correspond to the drive part 212' described above. The nut 212 is connected to the slot die 100, and the slot die 100 may be moved according to the linear movement of the nut 212.

**In** particular, the ball screw 210 may precisely control the movement distance thereof. Additionally, the ball screw 210 is not large in size and may have a relatively simple structure. Accordingly, by utilizing the ball screw 210, the first drive unit 200 may be implemented compactly and efficiently.

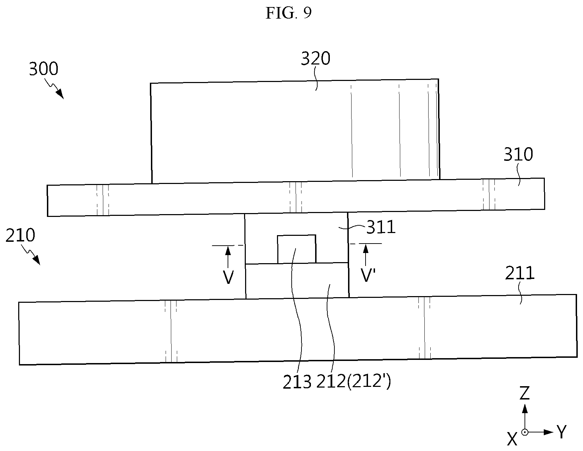

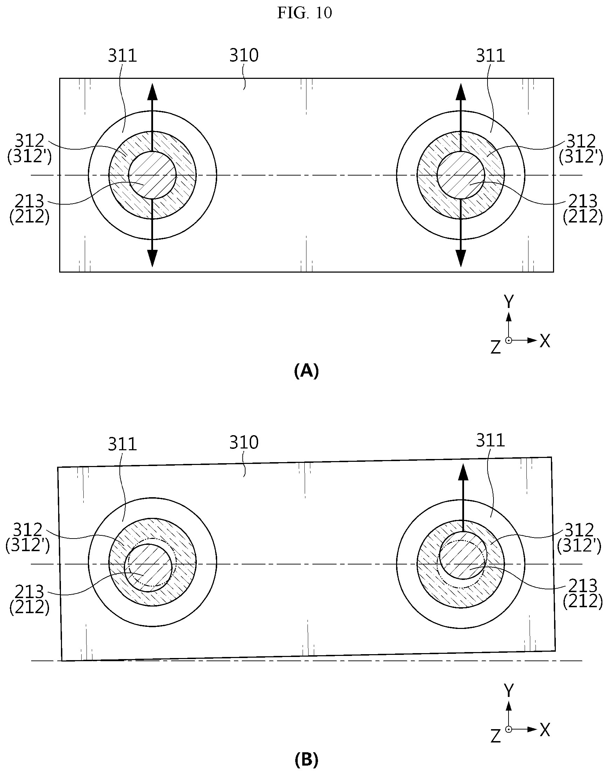

Meanwhile, the slot die may be tilted at a predetermined angle depending on the driving method of the first drive unit. This will be described hereinbelow with reference to FIGS. 9 and 10.

FIG. 9 is a schematic diagram for describing the coupling structure of a first drive unit in a slot die coater according to still another embodiment of the present disclosure. FIG. 10 is a schematic cross-sectional view in the V-V' direction of FIG. 9.

Referring to FIG. 9, the nut 212 of the ball screw 210 may be coupled to the rotating unit 300, more specifically, the second support plate 310. For example, the nut 212 may be provided with a coupling protrusion 213. This coupling protrusion 213 may be integrally formed with the nut 212, and alternatively, may be mechanically coupled to the nut 212 through a separate coupling means, for example, a screw, a pin, or the like. A fastening part 311 may be provided on the lower surface of the second support plate 310. And, this fastening part 311 may be provided with a coupling groove portion that is concavely formed upward. The coupling protrusion 213 of the nut 212 is inserted into the coupling groove portion of the fastening part 311, and accordingly, the nut 212 and the fastening part 311 may be coupled to each other. At this time, although not illustrated in the drawing, the coupling protrusion 213 and the fastening part 311 may be coupled through an additional coupling means such as a screw, a pin, or the like.

As described above, the nuts 212 are provided in a pair and may be coupled to the second support plate 310 at two coupling points. At this time, the two coupling points may be spaced apart from each other in the left-right direction (X-axis direction). In other words, as illustrated in FIG. 10, the nut 212, more precisely, the coupling protrusion 213 provided on the nut 212, and the fastening part 311 of the second support plate 310 may be coupled. In this coupled state, as illustrated in (A) of FIG. 10, when the two nuts 212 move forward or backward by the same distance, the second support plate 310 (and the slot die coupled thereto) may move forward or backward by the same distance.

Meanwhile, one nut 212 of the two nuts 212 may be moved while the other nut 212 remains stationary. For example, as illustrated in FIG. 10 (B), while the nut 212 on the left is fixed, only the nut 212 on the right may move forward. In this case, as illustrated in (B) of FIG. 10, the second support plate 310 may be tilted at a predetermined angle with the Z-axis direction as the rotation axis direction.

In this regard, if the coupling protrusion 213 and the fastening part 311 are coupled in a completely tightened state with no tolerance, theoretically, the two nuts 212 may not be able to move at different distances. Alternatively, if the nuts 212 are forced to move at different distances with a stronger driving force, the ball screw 210 or a part of the coupling point may be damaged.

However, in reality, there may be an assembly tolerance having a predetermined gap at the point where the coupling protrusion 213 and the fastening part 311 are coupled (i.e., the coupling point). For example, in FIG. 10, a space between the coupling protrusion 213 and the fastening part 311, i.e., an area indicated by the reference numeral 312', may be an assembly tolerance. And, the tolerance 312' exists in this way, and thus when only the right nut 212 is further moved forward, the second support plate 310 may be tilted with the Z-axis direction as the rotation axis direction, as illustrated in FIG. 10 (B). At this time, the degree of tilting may correspond to the difference in the movement distance of a pair of nuts 212.

For reference, in order to help visual understanding, the gap of the tolerance 312' is emphasized and expressed widely in FIG. 10, but the actual tolerance may be finer. In this regard, during the process of applying a coating solution to the substrate 20, for example, the current collector, the gap between the slot die 100 and the current collector may have a very small size, for example, several to several tens of micrometers (µm). Accordingly, the distance or angle for moving or tilting the slot die 100 to correct the pattern defect may be much smaller than that. For example, in an actual work process, the difference in the movement distance for tilting may be several µm, and thus the degree at which the slot die 100 is tilted may be very fine. Therefore, even if the size of the tolerance 312' is very small, the slot die 100 may be tilted by utilizing this tolerance space, and such tilting may be sufficiently utilized to control the slot die 100.

Meanwhile, the above description is intended to explain a principle or a phenomenon in which the slot die may be tilted due to the tolerance when there is the tolerance between the two configurations, that is, the coupling protrusion 213 and the fastening part 311, and the movement distances of the two nuts 212 are different. To this end, a simple and easy-to-understand coupling structure is described as an example. Therefore, it is obvious that the structure or shape in which the nut 212 and the second support plate 310 are coupled may be changed in various forms during the actual product manufacturing process.

According to the present embodiment, the slot die 100 may be tilted. Therefore, by tilting the slot die 100 when a pattern defect occurs, the pattern defect may be efficiently corrected. In particular, in the case of the present embodiment, a separate configuration, for example, a motor for rotating the slot die 100, may not be provided in order to tilt the slot die 100. In other words, by utilizing the first drive unit 200, the slot die 100 may be linearly moved in the Y-axis direction and also tilted. Therefore, the slot die coater 1000 may be manufactured compactly and efficiently.

Meanwhile, the slot die coater 1000 may further include an elastic portion 312. The elastic portion 312 may be configured to more precisely control the tilting of the slot die 100. Specifically, as described above, if there is a difference in the movement distance of the two nuts 212, the slot die 100 may be tilted. At this time, the tilting may occur by utilizing the tolerance 312' space at the point where the coupling protrusion 213 and the fastening part 311 are coupled. To put it more bluntly, the position of the coupling protrusion 213 may be misaligned within the tolerance range (space), and as a result, the slot die 100 may tilt.

However, when using the tolerance 312' in this way, it may be difficult to precisely control the degree of tilting according to the difference in the movement distance. In other words, it is necessary to functionally express the relationship between the difference in the movement distance and the degree of tilting, which should be utilized for slot die control, but when tilting using the tolerance, there may be limitations in the accuracy (accuracy of the functionalization, repeatability, or the like). This may be because the tolerance itself is set by considering a certain degree of error range.

The elastic portion 312 may be intended to solve the above-mentioned problem. Specifically, the elastic portion 312 has elasticity and may be compressed and restored. The elastic portion 312 may compensate for the difference in the movement distance of the pair of nuts 212 while being compressed and restored. Specifically, if there is a difference in the movement distance of the nuts 212, the position of the coupling protrusion 213 may be misaligned as described above. At this time, in the above-described embodiment, the tolerance 312' provided this space, that is, the space in which the coupling protrusion 213 may be misaligned. On the other hand, in the present embodiment, the elastic portion 312 may provide this space while being compressed and restored.

Referring to FIG. 10 again, for example, the elastic portion 312 may be formed in an annular shape. This elastic portion 312 may be coupled while surrounding the coupling protrusion 213. In other words, the coupling protrusion 213 may be inserted into the elastic portion 312. At this time, the coupling protrusion 213 may be coupled in a forced-fit manner so as to be completely in close contact with the elastic portion 312. Then, the elastic portion 312 may be disposed between the coupling protrusion 213 and the fastening part 311.

For reference, in the above-described embodiment, the reference numeral 312' was described as a tolerance space, but in the present embodiment, the reference numeral 312 may refer to an elastic portion. That is, the elastic portion 312 may be disposed in the space where the tolerance 312' in the previous embodiment is formed, that is, the space between the coupling protrusion 213 and the fastening part 311. For reference, in this specification, the description of the same part in the drawing as a tolerance and an elastic portion by changing only the reference numerals is intended to more clearly explain the difference in effect in the two embodiments by directly comparing the meanings of the tolerance 312' and the elastic portion 312 in the same structure (position). However, this does not mean that the thickness of the elastic portion 312 is as thin as the tolerance 312', and the elastic portion 312 may have a predetermined thickness.

Returning to the above, if a pair of nuts 212 move forward (or backward) identically as illustrated in FIG. 10 (A) in a state where the elastic portion 312 is disposed as described above, the second support plate 310 may move forward without tilting in either direction. At this time, both elastic portions 312 may maintain the same shape, for example, an annular shape.

Meanwhile, as illustrated in FIG. 10 (B), when only the right nut 212 moves forward by a certain distance further, the two elastic portions 312 may be compressed respectively. For example, the right elastic portion 312 may be compressed at the upper right side, and the left elastic portion 312 may be compressed at the lower left side. And, while compressing the elastic portions 312 in this way, the position of the coupling protrusion 213 may be misaligned, and accordingly, the second support plate 310 may be tilted. At this time, the degree of tilting may be functionalized according to the difference in movement distance by considering the shape (thickness) and elastic strength of the elastic portion 312.

According to the present embodiment, the slot die 100 may be tilted by utilizing the elastic deformation of the elastic portion 312. At this time, the elastic deformation of the elastic portion 312 may be linear and have high reproducibility or reliability. Therefore, the tilting of the slot die 100 may be controlled more precisely.

Meanwhile, although not illustrated in the drawings, the slot die coater 1000 according to the present disclosure may further include a measuring unit and a control unit.

The measuring unit may be a device that measures the shape of a pattern formed on a substrate 20, for example, the thickness or width of the pattern. For example, the measuring unit may measure the thickness or width of the pattern by irradiating a laser toward the pattern and receiving a laser reflected from the surface of the pattern. The measuring unit may be installed to be movable in the width direction of the substrate 20 to measure the shapes of a plurality of patterns. Alternatively, by providing a plurality of measuring units, the shapes of a plurality of patterns may be measured.

The control unit may receive the shape of each pattern measured by the measuring unit. When the shape of the pattern is defective, the control unit may correct the pattern shape by controlling the motion of the slot die 100 forming the corresponding pattern. To this end, the control unit is electrically connected to the drive unit that controls the motion of each slot die 100, that is, the first drive unit 200, the rotating unit 300, and the module drive unit 600, and may control the driving of these.

Hereinafter, when a defect occurs in some patterns in the process of forming patterns with the slot die coater 1000 according to the present disclosure, an embodiment of controlling the motion of the slot die 100 to correct it will be described.

First, in the slot die coater 1000 according to the present disclosure, each slot die 100 may move linearly in the Y-axis direction (by the first drive unit) and in the X-axis direction (by the module drive unit), and may rotate (by the rotating unit) with the Z-axis direction as the rotation axis direction. Additionally, tilting with the Z-axis direction as the rotation axis may also be possible.

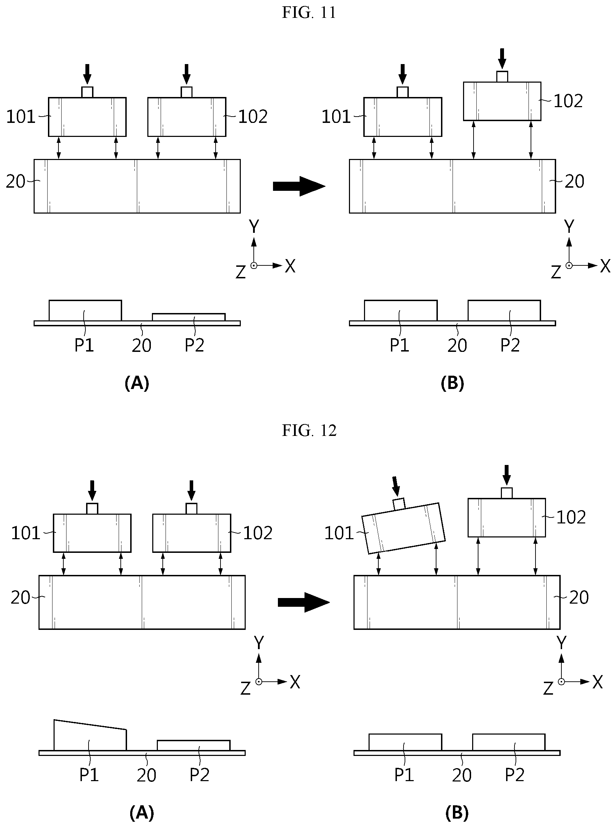

FIGS. 11 to 14 are views for describing the process of correcting pattern defects.

As in (A) of FIG. 11, the thickness of the pattern P2 formed by the right slot die 102 may be thinner than the normal pattern P1 (P2 < P1). In this case, as in (B) of FIG. 11, the right slot die 102 may be moved in the Y-axis direction to widen the gap between the slot die 102 and the substrate 20. That is, the coating gap of the right slot die 102 may be changed separately from the left slot die 101. Then, the thickness of the pattern P2 formed by the right slot die 102 may be changed to a normal thickness (P2 = P1). In this way, the left slot die 101 and the right slot die 102 may be individually controlled to form the pattern P1 and the pattern P2 appropriately.

As illustrated in (A) of FIG. 12, the pattern P1 formed by the left slot die 101 may be formed to be inclined. In this case, as illustrated in (B) of FIG. 12, by tilting the left slot die 101 in the opposite direction of the slope, the shape of the pattern P1 may be corrected. That is, the left/right coating gap may be adjusted even within one slot die 101. In this way, the left slot die 101 and the right slot die 102 may be individually controlled to form the pattern P1 and the pattern P2 appropriately.

At this time, the tilting method may rotate the left slot die 101 with the Z-axis as the rotation axis through the rotating unit 300. In another way, the left slot die 101 may be tilted by utilizing the first drive unit 200 (i.e., by moving only one of the two nuts).

In still another way, rotation by the rotating unit and tilting by the first drive unit may be used in combination. For example, when the shape of the pattern requires the left slot die 101 to be tilted by about 10, the left slot die 101 may be tilted by about 5 through the first drive unit, and the left slot die 101 may be rotated (tilted) by about 5 in the same direction through the rotating unit. Then, the left slot die 101 may be tilted by about 10.

In particular, when using the two methods in combination in this way, there may be an advantage over using either method alone. Specifically, tilting by the first drive unit basically utilizes the phenomenon in which the coupling point is misaligned within the tolerance range, so that there may be a limit to the degree of tilting.

Additionally, tilting by the first drive unit and rotation (tilting) by the rotating unit may have different forms of slot die tilting. To simplify the description for better understanding, tilting by the rotating unit is a method of rotating based on the center of the slot die. For example, when the slot die is rotated counterclockwise, the center position of the slot die is fixed, and if the right end moves forward by 3, the left end moves backward by 3. On the other hand, the method of tilting by the first drive unit is a method in which the slot die rotates with the left end as the rotation center axis if the right end moves forward by 3 while the left end is fixed, and at this time, the center of the slot die may also move forward by about 1.5. Of course, when actually tilting, the slot die may be tilted in a slightly different way during the process of being misaligned, but it is clear that the slot die is tilted in a different way compared to when it rotates by the rotating unit. Therefore, if the motion of the slot die is controlled by a combination of tilting by the first drive unit and rotation by the rotating unit, the slot die may be controlled in more efficient and diverse ways, and as a result, pattern defects may be corrected more efficiently.

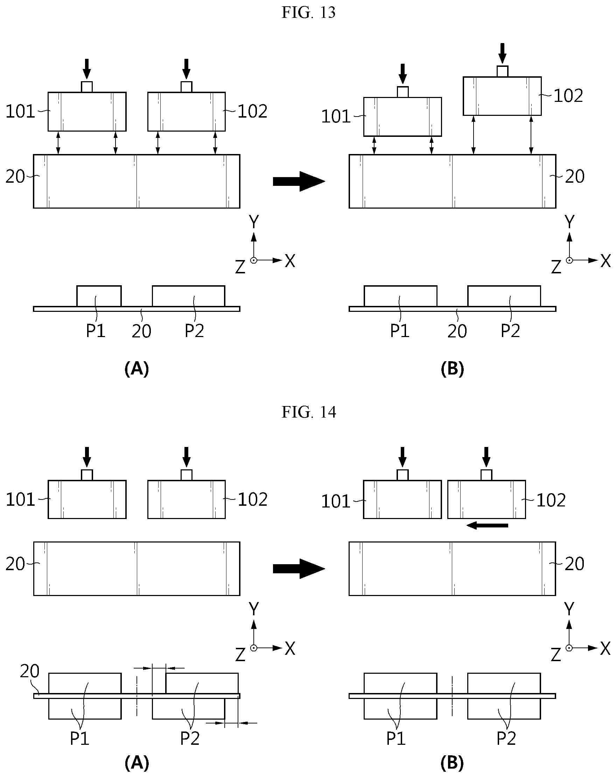

As illustrated in (A) of FIG. 13, the width (length in the X-axis direction) of the pattern P1 formed by the left slot die 101 may be narrower than the reference value, and the width of the pattern P2 formed by the right slot die 102 may be wider than the reference value. In this case, as illustrated in (B) of FIG. 13, by moving the left slot die 101 closer to the substrate 20 (i.e., by reducing the coating gap), the width of the pattern P1 may be widened and adjusted to the reference value. Conversely, by moving the right slot die 102 to widen the gap with the substrate 20, the width of the pattern P2 may be narrowed and adjusted to the reference value. In this way, the left slot die 101 and the right slot die 102 may be individually controlled to form the pattern P1 and the pattern P2 appropriately.

When coating on both surfaces of the substrate 20, a pattern is first formed on one surface of the substrate 20 and then on the opposite surface. However, as illustrated in (A) of FIG. 14, the patterns P2 formed on both surfaces of the substrate 20 in the right slot die 102 may be mismatched, i.e., may not be aligned. In this case, as illustrated in (B) of FIG. 14, the mismatch may be corrected by moving the right slot die 102 in a direction of offsetting the mismatch, i.e., to the left. In this way, by adjusting the movement of the right slot die 102 in the width direction, the left slot die 101 and the right slot die 102 may be individually controlled to form the pattern P1 and the pattern P2 appropriately.

As another example, the individual left/right coating gap and slurry flow rate of the slot die may be independently adjusted, thereby keeping the coating thickness profile flat while enabling changes in the coating width.

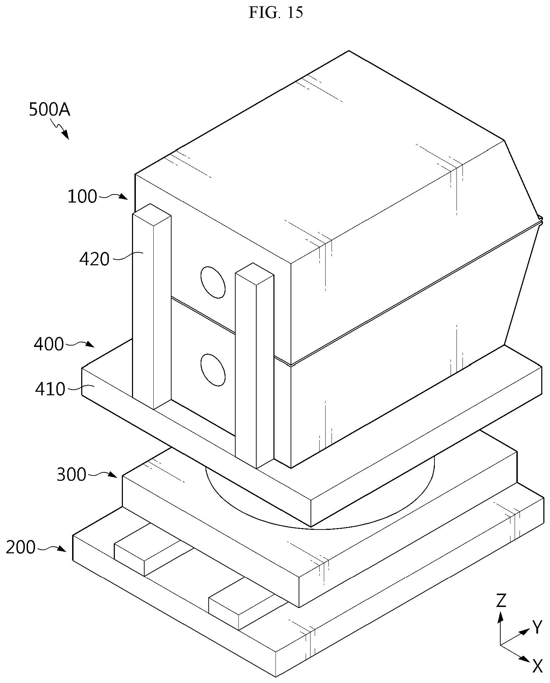

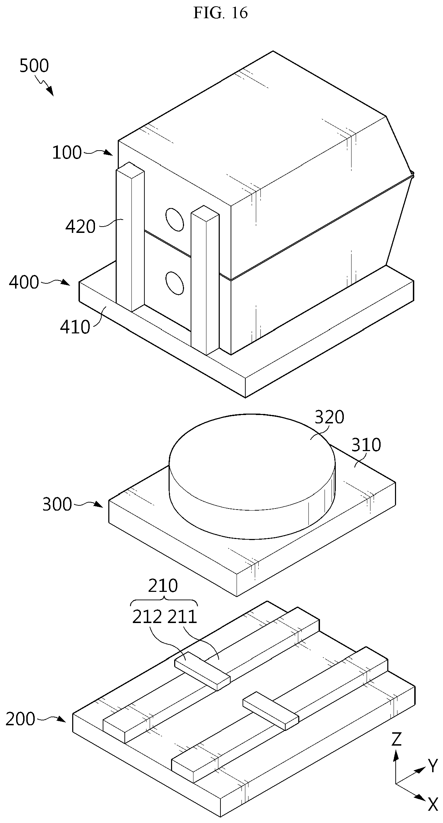

FIG. 15 is a schematic perspective view of a slot die module according to still another embodiment of the present disclosure, and FIG. 16 is an exploded perspective view of the slot die module illustrated in FIG. 15.

Referring to FIGS. 15 and 16, the slot die module 500A according to the present embodiment may further include a second drive unit 400 when compared with the slot die module 500 illustrated in FIG. 5 described above. Hereinafter, the second drive unit 400 will be mainly described.

The slot die module 500A according to the present embodiment may include a first drive unit 200, a rotating unit 300, a second drive unit 400, and a slot die 100.

The first drive unit 200 may be disposed at the lowest side. The rotating unit 300 may be coupled to the upper side of the first drive unit 200. Since the specific configuration or function of the first drive unit 200 and the rotating unit 300 may be substantially the same as described above, a detailed description thereof will be omitted.

The second drive unit 400 is for linearly moving the slot die 100 in the second axis direction, that is, in the upper-lower direction (Z-axis direction). The second drive unit 400 may be connected to the slot die 100. Specifically, the second drive unit 400 may include a third support plate 410 coupled to the upper side of the rotating unit 300 and a linear actuator 420 coupled to the third support plate 410. At this time, the linear actuator 420 may be disposed to allow the drive part thereof to be linearly movable in the Z-axis direction. For example, the linear actuator 420 may be disposed to be erected in the upper-lower direction. The linear actuator 420 may be implemented in the form of a ball screw.

For example, the nut of the ball screw may be coupled to the rear surface of the slot die 100. When the ball screw moves, the slot die 100 may be moved in the upper-lower direction. The configuration or coupling method of the ball screw may be similar to or substantially the same as the configuration or coupling method of the ball screw in the first drive unit described above (however, the arrangement direction of the ball screw is different).

The slot die module 500A configured in this way is coupled to the module drive unit, and each slot die module 500A may individually move in the left-right direction by the module drive unit.

According to an embodiment of the above-mentioned configuration, the slot die 100 may be moved in the upper-lower direction. That is, the movement of the slot die 100 may be controlled more diversely (increasing the degree of freedom of the slot die 100), and accordingly, the structure or shape of the pattern formed on the substrate 20 may be controlled (changed) more efficiently.

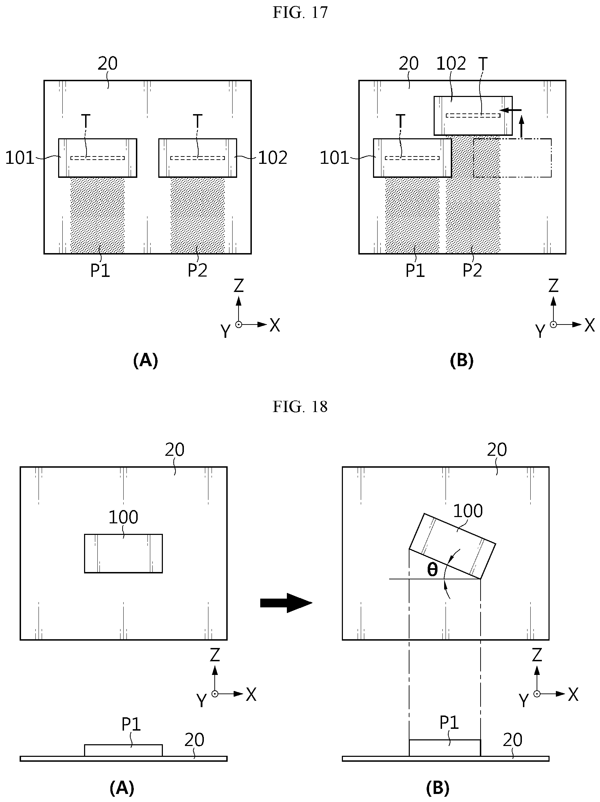

FIG. 17 is a view for describing the process of forming patterns using a slot die coater of the present disclosure.

Referring to FIG. 17, as illustrated in (A) of FIG. 17, when forming a pattern on a substrate 20, for example, a current collector, through a plurality of slot dies 101, 102, two adjacent patterns P1, P2 maybe spaced apart from each other by a certain distance. This may be because the slot dies 101, 102 are disposed to be spaced apart from each other, and also because the outlet T of the slot dies has a narrower width than the slot dies 101, 102. In this case, since the portion between the pattern P1 and the pattern P2 is discarded after cutting, a large amount of current collector may be wasted.

However, as illustrated in (B) of FIG. 17, when patterns P1, P2 are formed in a state of moving the right slot die 102 upward and then to the left by a certain distance, the gap between the two patterns P1, P2 may be narrowed. Therefore, the amount of wasted current collector may be reduced, and as a result, productivity may be improved. Furthermore, if the position of the right slot die 102 is well adjusted, the patterns P1, P2 formed by the two slot dies 101, 102 may be combined to form one pattern, or the two patterns P1, P2 may be overlapped to a certain extent. That is, various types of patterns, such as a pattern wider than the width of the outlet T of the slot die (e.g., twice as wide), may be formed.

Meanwhile, the slot die 100 may be configured to be tilted with the Y-axis direction as the rotation axis direction. And, such tilting may be implemented by the second drive unit 400. Hereinafter, it will be described with reference to FIG. 16, and FIGS. 9 and 10 together.

Referring to FIG. 16, the second drive unit 400 may be provided with a pair of linear actuators 420. At this time, the linear actuator 420 may be implemented in the form of a ball screw. The nuts of each ball screw may be coupled to the rear surface of the slot die 100, and may be coupled at coupling points spaced apart from each other in the X-axis direction.

For example, although not illustrated in the drawing, a coupling protrusion may be provided on the ball screw constituting the second drive unit, and a fastening part to which the coupling protrusion is coupled may be provided at the rear surface of the slot die. Additionally, an elastic portion may be disposed between the coupling protrusion and the fastening part. That is, the structure in which the ball screw constituting the second drive unit and the slot die are coupled may be similar to or substantially the same as the coupling structure of the first drive unit and the second support plate described previously in FIGS. 9 and 10.

According to an embodiment of the above-mentioned configuration, if there is a difference in the movement distance of a pair of nuts coupled to the slot die 100, the slot die 100 may be tilted corresponding to this difference. At this time, the slot die 100 may be tilted with the Y-axis direction as the rotation axis direction. And, if the degree of freedom of the slot die 100 increases in this way, the structure or shape of the pattern formed on the substrate 20 may be controlled (changed) more efficiently.

In particular, in the case of the present embodiment, a second drive unit 400 for moving the slot die 100 in the Y-axis direction may be utilized, rather than further adding a separate configuration, for example, a rotating unit, in order to tilt the slot die 100 in the Y-axis direction. Therefore, the degree of freedom of the slot die 100 may be increased without further complicating the configuration of the device.

Hereinafter, with reference to FIG. 18, an embodiment of controlling a pattern shape in a slot die coater according to the present embodiment will be described. FIG. 18 is a view for describing the process of changing a pattern shape using a slot die coater of the present disclosure.

In (A) of FIG. 18, the slot die 100 is disposed parallel to the X-axis direction. In this state, if the slot die 100 is tilted with the Y-axis direction as the rotation axis direction as in (B) of FIG. 18, the width of the pattern may be narrowed. For example, if the width of the pattern P1 illustrated in (A) of FIG. 18 is W and the angle at which the slot die 100 is tilted is 0, the width of the pattern P1 illustrated in (B) of FIG. 18 may theoretically be narrowed to Woosθ. And, when the amount of coating solution discharged from the slot die 100 is constant, if the width of the pattern is narrowed in this way, the width of the pattern may become thicker. Of course, the width or thickness of the pattern may not be changed in accordance with the geometric theory described above, but it may be clear that the width of the pattern may be changed by this principle.

As described above, in the slot die coater 1000 according to the present disclosure, when there is a pattern defect, the control unit may individually control only the corresponding slot die 100 to solve the pattern defect. Specifically, when there is a defect in the pattern shape measured by the measuring unit, the control unit controls the position and posture of the slot die to allow the corresponding defect to be solved. In other words, the coating gap between the slot die and the substrate may be adjusted, and through this, the pattern defect may be corrected.

In particular, in the case of the present disclosure, each slot die 100 may individually move linearly in the X-axis, Y-axis, and Z-axis directions. Additionally, rotation (rotation by the rotating unit) and tilting (tilting by the first drive unit) with the Z-axis (second axis direction) as the rotation axis are possible. Furthermore, tilting (tilting by the second drive unit) with the Y-axis as the rotation axis is possible. That is, according to the present disclosure, there are various options (e.g., six degrees of freedom) capable of controlling the position and posture of the slot die, and the control unit may efficiently control the slot die by appropriately utilizing these options.

For example, as described previously in FIG. 12, when the pattern P1 is formed to be inclined (i.e., the thickness of the pattern is different in the width direction (X-axis direction)), the shape of the pattern P1 may be corrected by rotating or tilting the slot die 101 in the Z-axis direction. In particular, if the slot die is controlled by a combination of tilting and rotation, the slot die may be controlled more efficiently. This may be because the rotation and tilting behave in different ways, which has been described above. Accordingly, the control unit may control the slot die using this method.

Additionally, as described in FIG. 18, when the pattern P1 is wider in width (X-axis direction) and slightly thinner in thickness than the reference value, this may be corrected by tilting the slot die 100 with the Y-axis direction (first axis direction) as the rotation axis. Of course, as in correcting the P2 pattern shape in FIG. 11, a method of increasing the coating gap between the slot die P2 and the substrate 20 may be used, but tilting the slot die 100 as in FIG. 18 may be a more efficient method. Accordingly, the control unit may control the slot die using this method. For reference, the reference value may mean the width and thickness of a normal pattern (i.e., a pattern set by the user).

Meanwhile, in the above-described embodiment, it has been described that one outlet is formed in each slot die. However, if a shim having multiple openings is used, two or more outlets may be formed in each slot die.

For example, each slot die is commonly applied to one substrate. One slot die may be configured to form one or more patterns. Preferably, in order to control each of the multiple patterns formed in the width direction, slot dies are provided in the number corresponding to the number of patterns. For example, by setting the shim opening to one each, two slot dies may be placed side by side in the width direction of the substrate, thereby forming two patterns in the width direction. In another example, by setting the shim opening to one each, four slot dies may be placed side by side in the width direction of the substrate, thereby forming four patterns in the width direction. In still another example, by setting the shim opening to two each, two slot dies may be placed side by side in the width direction of the substrate, thereby forming four patterns in the width direction.

Additionally, in the above-described embodiment, it has been described that a plurality of slot die modules are disposed in a row, but some of the plurality of slot die modules may be disposed horizontally and others may be disposed vertically.

Additionally, in the above-described embodiment, it has been described that a plurality of slot dies are disposed to face the same direction. In other words, it has been described that the plurality of slot dies discharge the coating solution toward one substrate. Alternatively, some of the plurality of slot dies may be disposed to face forward and others may be disposed to face backward. This arrangement may be implemented by rotating the slot dies through the rotating unit. And, if the slot dies are disposed in this way, it is possible to perform a process in which some of the slot dies discharge the coating solution to a first substrate disposed in the front and the remaining slot dies discharge the coating solution to a second substrate disposed in the rear. That is, a process of forming a pattern on different substrates or different areas on the same substrate may be performed.

Hereinafter, a method for coating an active material slurry using a slot die coater of the present disclosure will be briefly described as an example. The slot die coater is applied to the manufacture of a positive electrode of a secondary battery. The positive electrode has a structure in which a lower active material layer by a lower slurry layer and an upper active material layer by an upper slurry layer are sequentially stacked on a current collector. The lower active material layer contains a high content of a conductive agent, and the upper active material layer contains a relatively low content of a conductive agent. In this case, the conductive agent content of the lower active material layer may be adjusted in the range of 0.5 to 5 wt%. The upper active material layer may increase the active material content on the electrode surface and lower the electrical conductivity to a certain level by reducing the conductive agent content. In particular, when the conductive agent content of the upper active material layer is controlled to a very low level of 0.02 wt% or less, the exothermic reaction may be reduced when a short circuit occurs inside the cell.

In another example, the average particle diameter P1 of the active material forming the lower active material layer is in the range of 50 to 95% of the average particle diameter P2 of the active material forming the upper active material layer. In this case, an active material with a relatively small particle diameter is applied to the lower active material layer. By applying an active material with a relatively large particle diameter to the upper active material layer, it is possible to facilitate electrolyte impregnation and induce smooth movement of ions or holes.

Here, the flow rate ratio of the first coating solution and the second coating solution may be 1:1. The viscosity of the first coating solution and the second coating solution may be 1000 cps or more. Since it is necessary to be able to coat a coating solution with a viscosity of 1000 cps or more, the slot die coater of the present disclosure is different from the structure of a device that applies a coating solution with a lower viscosity than this, for example, ordinary resin liquids, such as a photographic sensitizing emulsion liquid, a magnetic liquid, a liquid imparting antireflection or antiglare properties, a liquid imparting a viewing angle enlargement effect, a pigment liquid for a color filter, and the like, and is not a device that can be reached by changing it. The first coating solution and the second coating solution may include graphite, a conductive agent, CMC, and a binder.

For a specific example, by coating the positive electrode active material slurry using the slot die coater of the present disclosure, the slot die coater may be applied to the manufacture of a positive electrode of a secondary battery. The positive electrode includes a current collector and a positive electrode active material layer formed on a surface of the current collector. The current collector exhibits electrical conductivity, such as Al, Cu, or the like, and may be used appropriately according to the polarity of the current collector electrode known in the field of secondary batteries. The positive electrode active material layer may further include at least one of a plurality of positive electrode active material particles, a conductive agent, and a binder. Additionally, the positive electrode may further include various additives for the purpose of supplementing or improving electrochemical properties.

The active material is not limited to a specific component as long as it can be used as a positive electrode active material of a lithium-ion secondary battery. Non-limiting examples thereof may include any one selected from: layered compounds such as lithium manganese composite oxides (LiMn₂O₄, LiMnO₂, and the like), lithium cobalt oxide (LiCoO₂), and lithium nickel oxide (LiNiO₂), or compounds substituted with one or more transition metals; lithium manganese oxides with the formula Li₁₊ₓMn₂₋ₓO₄ (where x is 0 to 0.33) such as LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; Ni site-type lithium nickel oxide represented by the formula LiNi₁₋ₓMₓO₂ (where M is Co, Mn, Al, Cu, Fe, Mg, B, or Ga, and x is 0.01 to 0.3); lithium manganese composite oxide represented by the formula LiMn₂₋ₓMₓO₂ (where M is Co, Ni, Fe, Cr, Zn, or Ta, and x is 0.01 to 0.1) or Li₂Mn₃MO₈ (where M is Fe, Co, Ni, Cu, or Zn); LiMn₂O₄ in which Li part of the formula is substituted with an alkaline earth metal ion; disulfide compounds; and Fe₂(MoO₄)₃; or a mixture of two or more of them. In the present disclosure, the positive electrode may include at least one of a polymer-based solid electrolyte, an oxide-based solid electrolyte, and a sulfide-based solid electrolyte as a solid electrolyte material.

The conductive agent may be typically added in an amount of 1 wt% to 20 wt% based on the total weight of the mixture including the active material. Such a conductive agent is not particularly limited as long as it has conductivity without causing chemical change in the corresponding battery, and particular examples thereof may include any one selected from: graphite such as natural graphite or artificial graphite; carbon black such as acetylene black, ketjen black, channel black, furnace black, lamp black, and summer black; conductive fibers such as carbon fibers or metal fibers; carbon fluoride; metal powders such as aluminum, and nickel powder; conductive whiskers such as zinc oxide and potassium titanate; conductive metal oxides such as titanium oxide; and conductive agents such as polyphenylene derivatives; or a mixture of two or more of them.

The binder is not particularly limited as long as it is a component that aids in the binding of the active material and the conductive agent and the binding to the current collector, and particular examples thereof may include polyvinylidene fluoride polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, styrene butadiene rubber, fluoro rubber, various copolymers, and the like. The binder may be typically included in the range of 1 wt% to 30 wt%, or 1 wt% to 10 wt% based on 100 wt% of the electrode layer.

By coating the negative electrode active material slurry using the slot die coater of the present disclosure, the slot die coater may be applied to the manufacture of a negative electrode of a secondary battery. The negative electrode includes a current collector and a negative electrode active material layer formed on a surface of the current collector. The negative electrode active material layer may further include at least one of a plurality of negative electrode active material particles, a conductive agent, and a binder. Additionally, the negative electrode may further include various additives for the purpose of supplementing or improving electrochemical properties.

As for the negative electrode active material, a carbon material such as graphite, amorphous carbon, diamond-like carbon, fullerene, carbon nanotube, and carbon nanohorn; a lithium metal material; an alloy material such as silicon or tin; an oxide material such as Nb₂O₅, Li₅Ti₄O₁₂ and TiO₂; or a combination of them may be used. For the negative electrode, the conductive agent, the binder, and the current collector may refer to the contents described for the positive electrode.

The active material slurry including the positive electrode active material or the negative electrode active material has a very high viscosity. For example, the viscosity may be 1000 cps or more. The viscosity of the electrode active material slurry for use in forming a secondary battery electrode may be 2000 cps to 30000 cps. For example, the negative electrode active material slurry may have a viscosity of 2000 cps to 4000 cps. The positive electrode active material slurry may have a viscosity of 8000 cps to 30000 cps. Since it is necessary to be able to coat a coating solution with a viscosity of 1200 cps or more, the slot die coater of the present disclosure is different from the structure of a device that applies a coating solution with a lower viscosity than this, for example, ordinary resin liquids, such as a photographic sensitizing emulsion liquid, a magnetic liquid, a liquid imparting antireflection or antiglare properties, a liquid imparting a viewing angle enlargement effect, a pigment liquid for a color filter, and the like, and is not a device that can be reached by changing it. The slot die coater of the present disclosure is for applying an active material slurry that may include an active material having an average particle diameter of, for example, around 10 _{fl}m, so that it is different from the device structure for applying other coating solutions that do not include particles of this size and is not a device that can be reached by changing it. The slot die coater of the present disclosure may be used as a coater for manufacturing an electrode.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

Meanwhile, terms indicating directions such as upper, lower, left, and right may be used in the present disclosure, but these terms are only for convenience of description, and it is obvious to those skilled in the art that the terms may vary depending on the position of a reference object or an observer.

**[Explanation of Reference Signs]**

| | | | |
|---|---|---|---|
| 1000: | slot die coater | 500: | slot die module |
| 100: | slot die | 200: | first drive unit |
| 210: | ball screw | 210': | linear actuator |
| 212: | nut | 212': | drive part |
| 213: | coupling protrusion | 220: | first support plate |
| 300: | rotating unit | 310: | second support plate |
| 311: | fastening part | 312: | elastic portion |
| 312': | tolerance | 320: | rotating plate |
| 400: | second drive unit | 410: | third support plate |
| 420: | linear actuator | 600: | module drive unit |
| 610: | linear motor | 611: | stator |
| 612: | mover | 612': | moving part |
| 620: | moving plate | 630: | linear guide |
| 640: | base portion | | |

## Claims

1. A slot die coater comprising:
a plurality of slot die modules that have a slot die for applying a coating solution on a substrate, a first drive unit for moving the slot die in a first axis direction, and a rotating unit for rotating the slot die with a second axis direction as a rotation axis direction, and are disposed to be spaced apart from each other; and
a module drive unit that moves each of the slot die modules in a third axis direction orthogonal to the first axis direction.

2. The slot die coater according to claim 1,
wherein the plurality of slot die modules are disposed on the same straight line along the third axis direction, and each of the slot die modules is individually movable in the third axis direction.

3. The slot die coater according to claim 2,
wherein the module drive unit comprises a stator disposed in the third axis direction, and a plurality of movers that are coupled to the slot die module and move along the third axis direction by an electromagnetic force formed between the stator and the mover.

4. The slot die coater according to claim 1,
wherein the first drive unit has a drive part that moves along the first axis direction,
wherein the drive part is provided in a pair, and the pair of drive parts are respectively connected to the slot die at two coupling points spaced apart from each other.

5. The slot die coater according to claim 4,
wherein the first drive unit comprises a ball screw, and
the nut of the ball screw is connected to the slot die at the coupling point.

6. The slot die coater according to claim 4,
wherein when there is a difference in the movement distances of the pair of drive parts, the slot die is configured to be tilted in response to the difference.

7. The slot die coater according to claim 6,
wherein an elastic portion that is compressed or relaxed during tilting of the slot die is provided at the two coupling points.

8. The slot die coater according to claim 7,
wherein the elastic portion is formed in an annular shape.

9. The slot die coater according to claim 4,
wherein the slot die is coupled to the rotating unit,
the drive part of the first drive unit is coupled to the rotating unit, and
when there is a difference in the movement distances of the pair of drive parts, the rotating unit and the slot die coupled to the rotating unit are tilted together in response to the difference.

10. The slot die coater according to claim 9,
wherein the drive part is provided with a coupling protrusion,
the rotating unit is provided with a fastening part to which the coupling protrusion is coupled, and
an elastic portion that is compressed or relaxed during tilting of the rotating unit is provided between the coupling protrusion and the fastening part.

11. The slot die coater according to claim 10,
wherein the elastic portion is formed in an annular shape and disposed to surround the coupling protrusion.

12. The slot die coater according to claim 1,
wherein each of the slot die modules further comprises a second drive unit for moving the slot die in the second axis direction.

13. The slot die coater according to claim 12,
wherein the slot die is configured to be tiltable by the second drive unit.

14. The slot die coater according to claim 13,
wherein each of the slot die modules is configured such that:
the second drive unit is coupled to the slot die to linearly move the slot die in the second axis direction,
the rotating unit is coupled to the second drive unit to rotate the second drive unit and the slot die together, and
the first drive unit is coupled to the rotating unit to linearly move the rotating unit, the second drive unit, and the slot die together in the first axis direction.

15. The slot die coater according to claim 13,
wherein the second drive unit has a drive part that moves along the second axis direction,
wherein the drive part is provided in a pair, and the pair of drive parts are respectively coupled to the slot die at two coupling points spaced apart from each other, and
when there is a difference in the movement distances of the pair of drive parts, the slot die is tilted in response to the difference.

16. The slot die coater according to claim 13, further comprising:
a measuring unit that measures the shape of a pattern formed by the coating solution applied on the substrate; and
a control unit that controls the movement of the slot die according to the pattern shape measured by the measuring unit.

17. The slot die coater according to claim 16,
wherein the control unit rotates or tilts the slot die with the second axis direction as a rotation axis direction when the thickness of the pattern is formed to be inclined.

18. The slot die coater according to claim 16,
wherein the control unit tilts the slot die around the first axis direction when the pattern is thinner in thickness and wider in width than a reference value.
